Europäisches Patentamt

European Patent Office   (11) Publication number:   **0 069 411**

Office européen des brevets   **A2**

(19)

(12)   **EUROPEAN PATENT APPLICATION**

(21) Application number: **82200726.6**

(22) Date of filing: **14.06.82**

(51) Int. Cl.³: **A 23 G 9/00**
**A 23 G 9/04**

(30) Priority: **03.07.81 IT 6792681**

(43) Date of publication of application:
**12.01.83 Bulletin 83/2**

(84) Designated Contracting States:
**AT BE CH DE FR GB LI LU NL SE**

(71) Applicant: **Sacchetto, Mario**
**Via Savigliano, 10**
**I-12030 Lagnasco (CN)(IT)**

(71) Applicant: **Sacchetto, Domenica**
**Via Savigliano, 10**
**I-12030 Lagnasco (CN)(IT)**

(71) Applicant: **Borretta, Pierpaolo**
**Via dei Romani**
**I-12037 Saluzzo (CN)(IT)**

(72) Inventor: **Sacchetto, Mario**
**Via Savigliano, 10**
**I-12030 Lagnasco (CN)(IT)**

(72) Inventor: **Sacchetto, Domenica**
**Via Savigliano, 10**
**I-12030 Lagnasco (CN)(IT)**

(72) Inventor: **Borretta, Pierpaolo**
**Via dei Romani**
**I-12037 Saluzzo (CN)(IT)**

(74) Representative: **Lotti, Giorgio**
**c o Ing. Barzano' & Zanardo Milano S.p.A. Via Cernaia 20**
**I-10122 Torino(IT)**

(54) Process for preparing a fruit-based food product of creamy consistency, and the relative product.

(57) A food product based on fruit and sugar, prepared in the following manner: the fruit reduced to a cream is deep-frozen; the blocks of deep-frozen fruit are ground to produce minute crystals; sugar syrup is added to this mass in a quantity varying between 10 and 30% according to the type of fruit; this mixture is mixed and stirred until the fruit crystal mass is incorporated into the syrup to give a compact, soft smooth cream of colour and taste equal to that of the fruit used.

EP 0 069 411 A2

DESCRIPTION

The invention relates to a process for preparing a fruit-based food product of creamy consistency, and to the relative product.

The product proposed by the invention is a food product of new conception, the appearance of which is substantially similar to ice cream, but both the taste and the process for its preparation are extremely different therefrom.

Ice cream is a foodstuff prepared by mixing various ingredients, mainly milk and milk derivatives, with eggs, glucose, fruit juices and syrups, cocoa, fats etc. until a cream is obtained.

The ice cream structure is obtained by beating and freezing, with the aid of thickening agents and possibly dispersants. The deep cooling causes crystallisation of the fats and sugars into a very fine homogeneous form, and stabilisation of the emulsion with air.

A mixture based on milk, sugar and thickening agents is usually prepared. This is heated to 70-85° and is ready for the various additions, namely various ingredients, emulsifying agents, flavours and colouring. Hot pasteurisation is then carried out, followed by rapid cooling and pouring into ice cream freezers where the mixture is frozen with simultaneous beating action to give a soft, smooth ice cream.

From the aforegoing it will be apparent that the process is rather laborious and requires the use of raw materials which must be subjected to rigid hygienic control. Even so, ice cream is not a natural foodstuff, and lends itself to considerable adulteration with the risk of causing damage to the body, even if temporary.

The invention provides a food product which has the same appearance as ice cream, i.e. creamy, soft and smooth, but with a decidedly more pleasant flavour due to the fact that its preparation uses only natural products, i.e. fruit and sugar and no others, neither fats, thickening agents, colouring nor preservatives.

The process for its preparation is also much simpler and more rapid than that used for preparing ice cream.

These and further objects which will be more apparent hereinafter are attained according to the invention by a process for preparing a fruit-based food product of creamy consistency, comprising the following stages:

- the fruit is cleaned and reduced to a cream;

- the pulp obtained is deep-frozen into blocks;

- the blocks are ground to give minute crystals;

- sugar is mixed with the minute crystal mass in a quantity determined by the type of fruit used, until a compact cream is obtained.

The fruit which constitutes the basic ingredient of the product according to the invention is fruit in its natural state, which is processed by being peeled or skinned, cut and reduced to a cream, and then deep-frozen into blocks.

This is a well known process in those concerns which produce deep-frozen fruit for those food industries which produce fruit juices and infant and dietetic products.

The processing according to the invention commences at this point.

The deep-frozen blocks are ground to obtain an amalgam of very minute crystals, similar to fruit snow.

Sugar syrup is then added to the obtained mass in a calculated proportion which varies according to the raw material used, i.e. the type of fruit. The mixture is stirred until the fruit crystal mass is incorporated into the sugar syrup.

The final product is a soft smooth cream of good consistency of the same colour as the fruit used to prepare it.

In the same manner, its taste is identical to that of the original fruit.

The sugar quantity can represent about 10-30% of the final product according to the type of fruit used, the remaining 70-90% being exclusively fruit.

As can be seen, the product is free of fats, colouring, preservatives, air and additives, and is therefore absolutely genuine.

As the mixture is being mixed, a small quantity of egg white between 0.4 and 1% of the product quantity can be added. This causes a very slight incorporation of air into the final product, to make it slightly softer and more tender.

In this respect, such a low percentage of egg white cannot be considered as sophistication or alteration of the product, which in reality maintains all its characteristics and qualities.

Its nutritive properties are high by virtue of the sugars present, but which are in a lower percentage than the sugar present in fruit ice cream, thus making the product also suitable for low calorie diets and as a foodstuff for infants.

As stated, the product appearance is similar to ice cream, so that it can be served in the manner of ice cream as a dessert at the end of the meal.

WHAT WE CLAIM IS

1. A process for preparing a fruit-based food product of creamy consistency, characterised by comprising the following stages:

- the fruit is cleaned and reduced to a cream;

- the pulp obtained is deep-frozen into blocks;

- the blocks are ground to give minute crystals;

- sugar is mixed with the minute crystal mass in a quantity determined by the type of fruit used, until a compact cream is obtained.

2. A process as claimed in claim 1, characterised in that the sugar is in the form of syrup.

3. A process as claimed in claims 1 and 2, characterised in that the sugar syrup is added to the extent of about 10-30% of the final product.

4. A process as claimed in claim 1, characterised in that in addition to the sugar, egg white is added to the minute crystal mass to the extent of about 0.4-1% by weight of the mass.

5. A food product prepared by the process claimed in the preceding claims.